# EUROPEAN PATENT SPECIFICATION

(11) **EP 4 467 871 B1**
(45) Date of publication and mention of the grant of the patent: **03.09.2025**
(21) Application number: 23213383.5
(22) Date of filing: 30.11.2023
(51) Int. Cl.: F23D 11/00, F23D 11/02, F23D 11/24, F23D 11/26, F23D 11/38, F23D 11/40, F23D 11/42, F24D 15/00, F24H 3/02, F24H 3/04, H02J 7/35, F24D 101/40

(54) **OUTDOOR CAMPING FUEL OIL HEATING APPARATUS**
OUTDOOR ÖL-HEIZGERÄT FÜR CAMPING
APPAREIL DE CHAUFFAGE EXTÉRIEUR À GAZOIL POUR CAMPING

(30) Priority: 25.05.2023 CN 202310597285
(43) Date of publication of application: 27.11.2024
(73) Proprietor: Ningbo Baogong Electrical Appliance Co., Ltd., Cixi City Zhejiang Province (CN)
(72) Inventor: ZHOU, Junshu, Cixi City (CN); YANG, Wujie, Cixi City (CN); CHEN, Pengjing, Cixi City (CN)
(74) Representative: Chung, Hoi Kan

(56) References cited:
- CN-A- 108 709 314
- CN-U- 203 518 215
- US-A- 4 081 238

## Description

### TECHNICAL FIELD

The present invention relates to the technical field of heating apparatuses, and in particular, to an outdoor camping fuel oil heating apparatus.

### BACKGROUND

At present, heating apparatuses mainly include an electric load heating apparatus and a fuel heating apparatus. The fuel heating apparatus includes a gas heating apparatus and a fuel oil heating apparatus. The fuel oil heating apparatus mainly uses kerosene or diesel as fuel, and a structure of the fuel oil heating apparatus includes a fuel tank filled with the kerosene or the diesel, an atomizer, a spray nozzle, a combustion chamber, and a fan. Fuel oil is delivered to the atomizer for atomization through an oil pipeline, and then the generated oil gas is sprayed into the combustion chamber at a high speed from a spray orifice through the spray nozzle. In this case, the fan is operated, and air is blown in from the spray orifice, so that the air is pre-mixed with the oil gas in the spray orifice, and then enters the combustion chamber and is ignited and combusted by an ignition needle. However, in the prior art, when the air is mixed with the oil gas by means of the fan, an air speed and the oil gas of the fuel oil heating apparatus are in a relatively constant and rapid mixing state, and a pre-mixing effect is poor. In this way, when the air and the oil gas enter the combustion chamber for combustion, hot gas is rapidly discharged. In this way, the oil gas is insufficiently combusted, resulting in relatively low combustion efficiency, increase in oil consumption, and poor heating effect. In addition, the fuel heating apparatus in the prior art is generally large in volume and is started to work with a mains supply. Therefore, the fuel heating apparatus is mostly used indoors, and is inconvenient to use in an outdoor environment without a power supply.

Document CN 108 709 314 A shows an outdoor camping fuel oil heating apparatus according to the preamble of claim 1. CN 203 518 215 U and US 4 081 238 A disclose other outdoor camping fuel oil heating apparatuses.

### SUMMARY

A purpose of the present invention is to provide an outdoor camping fuel oil heating apparatus, in which combustion time of a flame in a combustion cylinder is controlled reasonably, combustion efficiency is effectively improved, and indoor and outdoor power connections are facilitated.

In order to solve the above technical problem, the present invention is solved by the following technical solution: an outdoor camping fuel oil heating apparatus, comprising an oil tank, where the oil tank is provided with a cylindrical structure, the cylindrical structure comprises a housing, a combustion cylinder is disposed in the housing, a rear end of the combustion cylinder is connected with a combustion head assembly, a front end of the combustion cylinder is provided with a hot air outlet, an air supply assembly is disposed at the rear in the housing corresponding to the combustion head assembly, a control assembly is disposed at one side of the oil tank, the combustion head assembly comprises a fixed tray, an outer edge of the fixed tray is connected with a flame-stabilizing tray, an oil spray nozzle and an ignition needle connected to a middle part of the fixed tray are disposed in the flame-stabilizing tray, and a power storage assembly electrically connected to the control assembly is further disposed on the housing, where several fire retaining rings are uniformly disposed in the combustion cylinder, apertures of the several fire retaining rings are disposed from large to small from the combustion head assembly to a tail part of the combustion cylinder, and a plurality of combustion through holes distributed in a regular or irregular manner are formed in the several fire retaining rings.

Preferably, a horn sleeve extending into the combustion cylinder is connected in the middle of the fixed tray, an end of the horn sleeve disposed in the combustion cylinder is covered with an air guide cover in a coordination manner, a middle part of the other end of the horn sleeve is provided with an air guide sheet, and the air guide sheet is located in the flame-stabilizing tray.

Further preferably, the air guide cover comprises a cover body connected to the fixed tray, a conical air guide sleeve is disposed at an inner end of the cover body, a middle air guide through hole is formed at a top end of the conical air guide sleeve, and several lateral air guide through holes are uniformly formed in the conical air guide sleeve.

Further preferably, a plurality of combustion through holes distributed in a regular or irregular manner are formed in the fixed tray, the horn sleeve and the air guide sheet, respectively.

Further preferably, an outer end of the flame-stabilizing tray is connected with a volute, one side of the volute is provided with a volute motor, an air inlet is formed in the other side of the volute, the air inlet is correspondingly connected with an air inlet fixing plate formed with an air inlet hole, an air inlet regulating baffle is movably disposed in the air inlet fixing plate, and an air inlet regulating rod is connected to a side surface of the air inlet regulating baffle.

Further preferably, one side of the flame-stabilizing tray is connected with an electromagnetic pump through a pump support bracket in a coordination manner, an input end of the electromagnetic pump is connected to the oil tank through an oil suction pipe, and an output end of the electromagnetic pump is connected to the flame-stabilizing tray through the oil suction pipe and a straight joint.

Further preferably, the air supply assembly comprises a cold air motor disposed at a rear part of the housing, an output end of the cold air motor is connected with a fan blade, and a rear end of the housing is provided with a rear mesh cover.

Further preferably, the oil tank and the housing are connected through a connecting frame, the housing is disposed at an upper end of the connecting frame, both sides of the connecting frame are provided with side plates, the control assembly is connected to one of the side plates, and the air inlet regulating rod extends out of the other side plate.

Further preferably, the cylindrical structure further comprises a heat insulation cylinder sleeved outside the combustion cylinder, the housing comprises a lower shield, an upper end of the lower shield is connected with a front upper shield disposed corresponding to the heat insulation cylinder and a rear upper shield disposed corresponding to the combustion head assembly to the air supply assembly, the rear upper shield is provided with a handle, and a front end between the front upper shield and the lower shield is connected with a mask assembly.

Further preferably, the power storage assembly comprises a storage battery and/or a solar panel disposed on the front upper shield or the rear upper shield.

The beneficial effects of the present invention are that an oil tank is comprised, where the oil tank is provided with a cylindrical structure, the cylindrical structure comprises a housing, a combustion cylinder is disposed in the housing, a rear end of the combustion cylinder is connected with a combustion head assembly, a front end of the combustion cylinder is provided with a hot air outlet, an air supply assembly is disposed at the rear in the housing corresponding to the combustion head assembly, a control assembly is disposed at one side of the oil tank, the combustion head assembly comprises a fixed tray, an outer edge of the fixed tray is connected with a flame-stabilizing tray, an oil spray nozzle and an ignition needle connected to a middle part of the fixed tray are disposed in the flame-stabilizing tray, and a power storage assembly electrically connected to the control assembly is further disposed on the housing, several fire retaining rings are uniformly disposed in the combustion cylinder, apertures of the several fire retaining rings are disposed from large to small from the combustion head assembly to a tail part of the combustion cylinder, and a plurality of combustion through holes distributed in a regular or irregular manner are formed in the several fire retaining rings. As different apertures from large to small are successively formed in each fire retaining ring, and at the same time, a plurality of combustion through holes distributed in a regular or irregular manner are further formed in the fire retaining rings of the front two layers, a purpose of improving the combustion efficiency is finally achieved by blocking a residence time of a flame at each fire retaining ring during combustion. In addition, the control assembly is supplied with power through an energy storage assembly, so as to facilitate indoor and outdoor power connection.

### BRIEF DESCRIPTION OF DRAWINGS

FIG. 1 is a schematic structural diagram of the present invention;
FIG. 2 is an exploded schematic structural diagram of the present invention;
FIG. 3 is a schematic structural diagram of a concealed front upper shield, rear upper shield and combustion cylinder of the present invention; and
FIG. 4 is a schematic structural diagram of an air guide cover of the present invention.

### DETAILED DESCRIPTION OF THE EMBODIMENTS

The present invention is further described in detail below in conjunction with the accompanying drawings and embodiments.

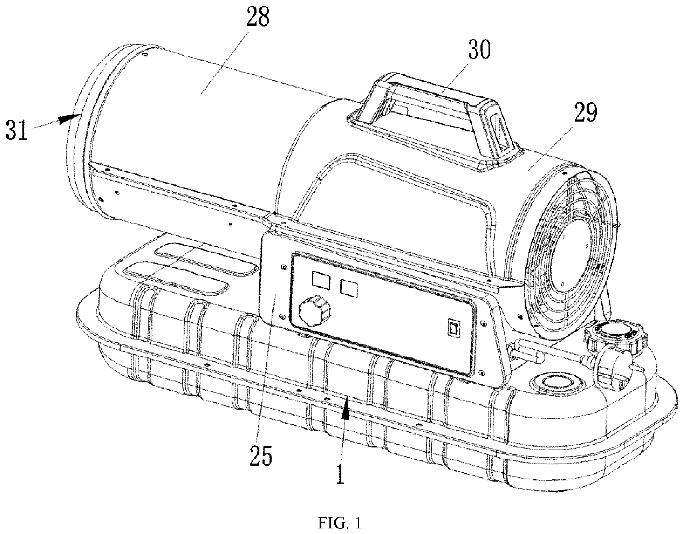

Embodiment 1: as shown in Fig. 1 to Fig. 3, an outdoor camping fuel oil heating apparatus comprises an oil tank 1, where the oil tank 1 is provided with a cylindrical structure, the cylindrical structure comprises a housing, a combustion cylinder 2 is disposed in the housing, a rear end of the combustion cylinder 2 is connected with a combustion head assembly, a front end of the combustion cylinder 2 is provided with a hot air outlet, an air supply assembly is disposed at the rear in the housing corresponding to the combustion head assembly, a control assembly is disposed at one side of the oil tank 1, the combustion head assembly comprises a fixed tray 3, an outer edge of the fixed tray 3 is connected with a flame-stabilizing tray 4, an oil spray nozzle and an ignition needle connected to a middle part of the fixed tray 3 are disposed in the flame-stabilizing tray 4, and a power storage assembly electrically connected to the control assembly is further disposed on the housing, several fire retaining rings 5 are uniformly disposed in the combustion cylinder 2, apertures of the several fire retaining rings 5 are disposed from large to small from the combustion head assembly to a tail part of the combustion cylinder 2, and a plurality of combustion through holes 6 distributed in a regular or irregular manner are formed in the several fire retaining rings 5. As different apertures from large to small are successively formed in each fire retaining ring 5, and at the same time, a plurality of combustion through holes 6 distributed in a regular or irregular manner are further formed in the fire retaining rings 5 of the front two layers, a purpose of improving the combustion efficiency is finally achieved by blocking a residence time (1s to 3s) of a flame at each fire retaining ring 5 during combustion. In addition, the control assembly is supplied with power through an energy storage assembly, thereby facilitating indoor and outdoor power connection.

In this embodiment, one side of the flame-stabilizing tray 4 is connected with an electromagnetic pump 19 through a pump support bracket in a coordination manner, an input end of the electromagnetic pump 19 is connected to the oil tank 1 through an oil suction pipe 20, and an output end of the electromagnetic pump 19 is connected to the flame-stabilizing tray 4 through the oil suction pipe 20 and a straight joint 21. By selecting the electromagnetic pump 19 that can be adapted to conventional or various corrosive oil, it is convenient to adapt to various oil sources such as fuel oil and gas.

In this embodiment, the air supply assembly comprises a cold air motor 22 disposed at a rear part of the housing, an output end of the cold air motor 22 is connected to a fan blade 23, a rear end of the housing is provided with a rear mesh cover 24, and the cold air motor 22 and the fan blade 23 form an axial flow fan, so that oxygen supply is large, and an air supply distance can be increased by connecting an external air duct.

In this embodiment, the oil tank 1 and the housing are connected through a connecting frame, the housing is disposed at an upper end of the connecting frame, both sides of the connecting frame are provided with side plates 25, the control assembly is connected to one of the side plates 25, the air inlet regulating rod 18 extends out of the other side plate 25, the cylindrical structure further comprises a heat insulation cylinder 26 sleeved outside the combustion cylinder 2, the housing comprises a lower shield 27, an upper end of the lower shield 27 is connected with a front upper shield 28 disposed corresponding to the heat insulation cylinder 26 and a rear upper shield 29 disposed corresponding to the combustion head assembly to the air supply assembly, the rear upper shield 29 is provided with a handle 30, and a front end between the front upper shield 28 and the lower shield 27 is connected with a mask assembly 31, thus achieving a reasonably-disposed structure and convenient loading and unloading.

In this embodiment, the power storage assembly comprises a storage battery and/or a solar panel disposed on the front upper shield 28 or the rear upper shield 29. Electric energy can be stored in the storage battery through the solar panel, and the storage battery supplies power to the control assembly, thereby facilitating the indoor or outdoor use of the fuel oil heating apparatus in this embodiment.

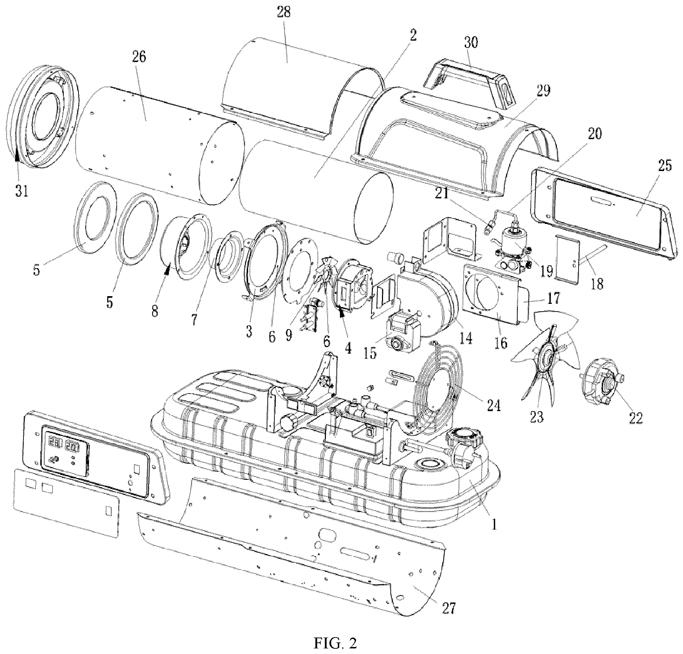

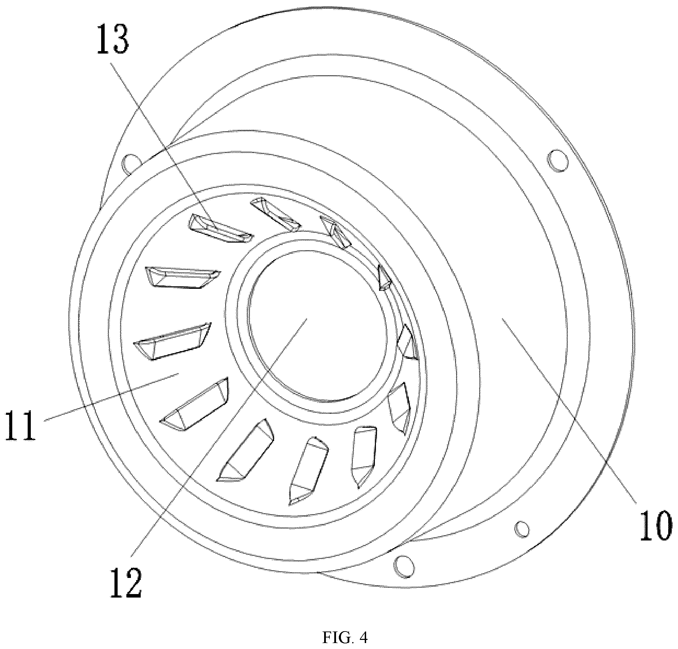

Embodiment 2: as shown in Fig. 2 and Fig. 4, a difference between this embodiment and Embodiment 1 is that a horn sleeve 7 extending into the combustion cylinder 2 is connected in the middle of the fixed tray 3, an end of the horn sleeve 7 disposed in the combustion cylinder 2 is covered with an air guide cover 8 in a coordination manner, a middle part of the other end of the horn sleeve 7 is provided with an air guide sheet 9, the air guide sheet 9 is located in the flame-stabilizing tray 4, and the air guide cover 8 comprises a cover body 10 connected to the fixed tray 3, a conical air guide sleeve 11 is disposed at an inner end of the cover body 10, a middle air guide through hole 12 is formed at a top end of the conical air guide sleeve 11, and several lateral air guide through holes 13 are uniformly formed in the conical air guide sleeve 11. During use, hot air is guided into the horn sleeve 7 through the air guide sheet 9, and the hot air is concentrated in the horn sleeve 7 through the conical air guide sleeve 11 of the air guide cover 8, and then the hot air is guided into the fire retaining ring 5 through the conical air guide sleeve 11 from the lateral air guide through hole 13. In addition, the conical air guide sleeve 11 may further return a part of hot air in the combustion cylinder 2 into the horn sleeve 7 through the air guide sheet 9 disposed in a middle part, and then the same is guided into the fire retaining ring 5 from the lateral air guide through hole 13, so that the hot air can be temporarily concentrated, thereby serving the purpose of assisting in improving the combustion efficiency. In this way, the whole heating apparatus forms a structure of a combustion engine + a furnace, and a problem that combustion is prone to produce black smoke can be solved.

In this embodiment, a plurality of combustion through holes 6 distributed in a regular or irregular manner are formed in the fixed tray 3, the horn sleeve 7 and the air guide sheet 9, respectively, and the fixed tray 3, the horn sleeve 7 and the combustion through holes 6 in the air guide sheet 9 can slow down a speed of sending hot air into the combustion cylinder 2.

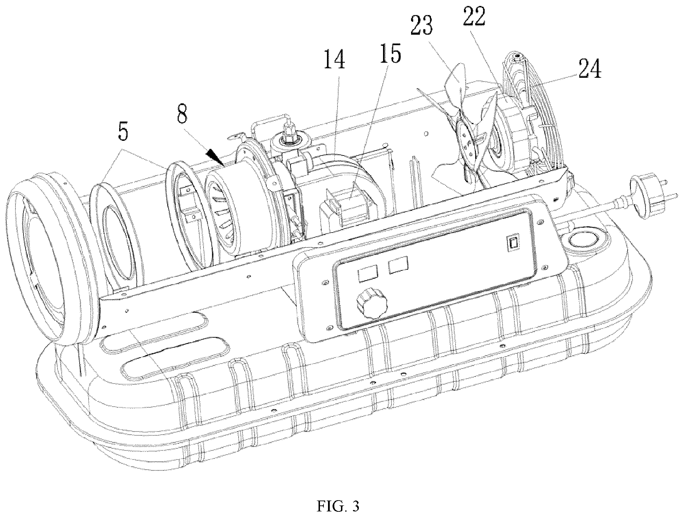

Embodiment 3: as shown in Fig. 2 and Fig. 3, an outer end of the flame-stabilizing tray 4 is connected with a volute 14, one side of the volute 14 is provided with a volute motor 15, an air inlet is formed in the other side of the volute 14, the air inlet is correspondingly connected with an air inlet fixing plate 16 formed with an air inlet hole, an air inlet regulating baffle 17 is movably disposed in the air inlet fixing plate 16, and an air inlet regulating rod 18 is connected to a side surface of the air inlet regulating baffle 17. In this embodiment, the volute motor 15 is disposed on an outer end of the flame-stabilizing tray 4, and the volute motor 15 is a lower-mounted centrifugal fan. In addition, an electric eye is disposed at a top end of the volute 14, and during use, the air inlet regulating rod 18 controls the air inlet regulating baffle 17 to move, to regulate a size of the air inlet, so as to regulate a size of an air inlet volume. The volute 14 and the volute motor 15 can be used together with the air guide cover 8 and the fire retaining ring 5 in a coordination manner.

It should be noted that the improvement of the combustion efficiency is mainly based on the significant improvement of the air outlet temperature on the premise of the same machine, the same power, the same air speed and the same air volume. In addition, during combustion of a current heating apparatus, nitrogen in the air is converted into exhaust gas of a nitrogen oxide after being combusted at a high temperature. Through the foregoing structure, emission of the exhaust gas can also be greatly reduced! (National claimed standard emissions are below 130 milligrams per cubic). For detailed parameters, see the following table:

| Air volume | Air speed | Powe r | Air outlet temperature 0m/0.5m/1m | CO | NO | NO2 |
|---|---|---|---|---|---|---|
| 350 | 3m/s | 20kW | 596/107/70°C | 20PP M | 30pp m | 40pp m |
| 380 | 3.26m/s | 20kW | 580/100/65°C | 15PP M | 20pp m | 30pp m |
| 420 | 3.6m/s | 20kW | 570/97/62°C | 10PP M | 10pp m | 25pp m |
| 450 | 3.86m/s | 20kW | 550/90/58°C | 8PPM | 8ppm | 20pp m |
| Corresponding to air volume, power, air speed, air outlet temperature, and nitrogen oxide emission, respectively, reflect improvement of combustion efficiency and effective reduction of hazardous emission | | | | | | |

According to the idea of the present invention, changes may be made to the specific implementations and application scope, and the content of the specification shall not be construed as a limitation to the present invention as defined by the appended claims.

## Claims

1. An outdoor camping fuel oil heating apparatus, comprising an oil tank (1), wherein the oil tank (1) is provided with a cylindrical structure, the cylindrical structure comprises a housing, a combustion cylinder (2) is disposed in the housing, a rear end of the combustion cylinder (2) is connected with a combustion head assembly, a front end of the combustion cylinder (2) is provided with a hot air outlet, an air supply assembly is disposed at the rear in the housing corresponding to the combustion head assembly, a control assembly is disposed at one side of the oil tank (1), the combustion head assembly comprises a fixed tray (3), an outer edge of the fixed tray (3) is connected with a flame-stabilizing tray, an oil spray nozzle and an ignition needle connected to a middle part of the fixed tray (3) are disposed in the flame-stabilizing tray,
**characterized in that** a power storage assembly electrically connected to the control assembly is further disposed on the housing,
and **in that** several fire retaining rings (5) are uniformly disposed in the combustion cylinder (2), apertures of the several fire retaining rings (5) are disposed from large to small from the combustion head assembly to a tail part of the combustion cylinder (2), a plurality of combustion through holes distributed in a regular or irregular manner are formed in the several fire retaining rings (5), and the fire retaining rings (5) and
the combustion through holes block a residence time of a flame during combustion, thereby improving combustion efficiency in the combustion cylinder (2).

2. The outdoor camping fuel oil heating apparatus according to claim 1, wherein a horn sleeve (7) extending into the combustion cylinder (2) is connected in the middle of the fixed tray (3), an end of the horn sleeve (7) disposed in the combustion cylinder (2) is covered with an air guide cover in a coordination manner, a middle part of the other end of the horn sleeve (7) is provided with an air guide sheet (9), and the air guide sheet (9) is located in the flame-stabilizing tray.

3. The outdoor camping fuel oil heating apparatus according to claim 2, wherein the air guide cover comprises a cover body (10) connected to the fixed tray (3), a conical air guide sleeve (11) is disposed at an inner end of the cover body (10), a middle air guide through hole is formed at a top end of the conical air guide sleeve (11), and several lateral air guide through holes are uniformly formed in the conical air guide sleeve (11).

4. The outdoor camping fuel oil heating apparatus according to claim 2, wherein a plurality of combustion through holes distributed in a regular or irregular manner are formed in the fixed tray (3), the horn sleeve (7) and the air guide sheet (9), respectively.

5. The outdoor camping fuel oil heating apparatus according to claim 1, wherein an outer end of the flame-stabilizing tray is connected with a volute (14), one side of the volute (14) is provided with a volute (14) motor, an air inlet is formed in the other side of the volute (14), the air inlet is correspondingly connected with an air inlet fixing plate (16) formed with an air inlet hole, an air inlet regulating baffle (17) is movably disposed in the air inlet fixing plate (16), and an air inlet regulating rod (18) is connected to a side surface of the air inlet regulating baffle (17).

6. The outdoor camping fuel oil heating apparatus according to claim 1, wherein one side of the flame-stabilizing tray is connected with an electromagnetic pump (19) through a pump support bracket in a coordination manner, an input end of the electromagnetic pump (19) is connected to the oil tank (1) through an oil suction pipe (20), and an output end of the electromagnetic pump (19) is connected to the flame-stabilizing tray through the oil suction pipe (20) and a straight joint (21).

7. The outdoor camping fuel oil heating apparatus according to claim 1, wherein the air supply assembly comprises a cold air motor (22) disposed at a rear part of the housing, an output end of the cold air motor (22) is connected with a fan blade (23), and a rear end of the housing is provided with a rear mesh cover (24)

8. The outdoor camping fuel oil heating apparatus according to claim 5, wherein the oil tank (1) and the housing are connected through a connecting frame, the housing is disposed at an upper end of the connecting frame, both sides of the connecting frame are provided with side plates (25), the control assembly is connected to one of the side plates (25), and the air inlet regulating rod (18) extends out of the other side plate (25).

9. The outdoor camping fuel oil heating apparatus according to claim 1, wherein the cylindrical structure further comprises a heat insulation cylinder (26) sleeved outside the combustion cylinder (2), the housing comprises a lower shield (27), an upper end of the lower shield (27) is connected with a front upper shield (28) disposed corresponding to the heat insulation cylinder (26) and a rear upper shield (29) disposed corresponding to the combustion head assembly to the air supply assembly, the rear upper shield (29) is provided with a handle (30), and a front end between the front upper shield (28) and the lower shield (27) is connected with a mask assembly (31).

10. The outdoor camping fuel oil heating apparatus according to claim 9, wherein the power storage assembly comprises a storage battery and/or a solar panel disposed on the front upper shield (28) or the rear upper shield (29).

## Patentansprüche

1. Heizöl-Heizeinrichtung für Camping im Freien, die einen Öltank (1) umfasst, wobei der Öltank (1) mit einer zylindrischen Struktur versehen ist, die zylindrische Struktur ein Gehäuse umfasst, ein Verbrennungszylinder (2) in dem Gehäuse angeordnet ist, ein hinteres Ende des Verbrennungszylinders (2) mit einer Verbrennungskopfanordnung verbunden ist, ein vorderes Ende des Verbrennungszylinders (2) mit einem Heißluftauslass versehen ist, eine Luftzufuhranordnung hinten in dem Gehäuse, die der Verbrennungskopfanordnung entspricht, angeordnet ist, eine Steuereinheit auf einer Seite des Öltanks (1) angeordnet ist, die Verbrennungskopfanordnung eine feste Schale (3) umfasst, eine Außenkante der festen Schale (3) mit einer Flammen stabilisierenden Schale verbunden ist, eine Ölsprühdüse und eine Zündnadel, die mit einem mittleren Teil der festen Schale (3) verbunden sind, in der Flammen stabilisierenden Schale angeordnet sind,
**dadurch gekennzeichnet, dass** eine Stromspeicheranordnung, die elektrisch mit der Steueranordnung verbunden ist, weiter auf dem Gehäuse angeordnet ist,
und dass mehrere Flammenrückhalteringe (5) gleichmäßig in dem Verbrennungszylinder (2) angeordnet sind, Öffnungen der mehreren Flammenrückhalteringe (5) von groß bis klein von der Verbrennungskopfanordnung bis zu einem Endteil des Verbrennungszylinders (2) angeordnet sind, eine Vielzahl von Verbrennungsdurchgangslöchern, die in einer regelmäßigen oder unregelmäßigen Weise verteilt in den mehreren Flammenrückhalteringen (5) gebildet sind, und die Flammenrückhalteringe (5) und die Verbrennungsdurchgangslöcher eine Verweilzeit einer Flamme während der Verbrennung blockieren, wodurch die Verbrennungseffizienz in dem Verbrennungszylinder (2) verbessert wird.

2. Heizöl-Heizeinrichtung für Camping im Freien nach Anspruch 1, wobei eine Hornhülse (7), die sich in den Verbrennungszylinder (2) erstreckt, in der Mitte der festen Schale (3) verbunden ist, ein Ende der Hornhülse (7), die in dem Verbrennungszylinder (2) in einer koordinierten Weise angeordnet ist, mit einer Luftführungsabdeckung abgedeckt ist, ein mittlerer Teil des anderen Endes der Hornhülse (7) mit einem Luftführungsblech (9) versehen ist, und sich das Luftführungsblech (9) in der Flammen stabilisierenden Schale befindet.

3. Heizöl-Heizeinrichtung für Camping im Freien nach Anspruch 2, wobei die Luftführungsabdeckung einen Abdeckungskörper (10) umfasst, der mit der festen Schale (3) verbunden ist, eine konische Luftführungshülse (11) an einem inneren Ende des Abdeckungskörpers (10) angeordnet ist, ein mittleres Luftführungsdurchgangsloch an einem oberen Ende der konischen Luftführungshülse (11) gebildet ist, und mehrere seitliche Luftführungsdurchgangslöcher gleichmäßig in der konischen Luftführungshülse (11) gebildet sind.

4. Heizöl-Heizeinrichtung für Camping im Freien nach Anspruch 2, wobei eine Vielzahl von Verbrennungdurchgangslöchern, die in einer regelmäßigen oder unregelmäßigen Weise verteilt sind, in der festen Schale (3), der Hornhülse (7) bzw. dem Luftführungsblech (9) gebildet sind.

5. Heizöl-Heizeinrichtung für Camping im Freien nach Anspruch 1, wobei ein äußeres Ende der Flammen stabilisierenden Schale mit einer Spirale (14) verbunden ist, eine Seite der Spirale (14) mit einem Spiralmotor (14) versehen ist, ein Lufteinlass an der anderen Seite der Spirale (14) gebildet ist, der Lufteinlass entsprechend mit einer Lufteinlassbefestigungsplatte (16) verbunden ist, die mit einem Lufteinlassloch gebildet ist, ein Lufteinlass-Regelleitblech (17) bewegbar in der Lufteinlassbefestigungsplatte (16) angeordnet ist, und ein Lufteinlass-Regelstab (18) mit einer Seitenfläche des Lufteinlass-Regelleitblechs (17) verbunden ist.

6. Heizöl-Heizeinrichtung für Camping im Freien nach Anspruch 1, wobei eine Seite der Flammen stabilisierenden Schale mit einer elektromagnetischen Pumpe (19) durch eine Pumpentraghalterung in einer Koordinationsweise verbunden ist, ein Eingangsende der elektromagnetischen Pumpe (19) über ein Ölansaugrohr (20) mit dem Öltank (1) verbunden ist, und ein Ausgangsende der elektromagnetischen Pumpe (19) durch das Ölansaugrohr (20) und ein gerades Gelenk (21) mit der Flammen stabilisierenden Schale verbunden ist.

7. Heizöl-Heizeinrichtung für Camping im Freien nach Anspruch 1, wobei die Luftzufuhranordnung einen Kaltluftmotor (22) umfasst, der an einem hinteren Teil des Gehäuses angeordnet ist, ein Ausgangsende des Kaltluftmotors (22) mit einem Lüfterflügel (23) verbunden ist, und ein hinteres Ende des Gehäuses mit einer hinteren Maschenabdeckung (24) versehen ist.

8. Heizöl-Heizeinrichtung für Camping im Freien nach Anspruch 5, wobei der Öltank (1) und das Gehäuse durch einen Verbindungsrahmen verbunden sind, das Gehäuse an einem oberen Ende des Verbindungsrahmens angeordnet ist, beide Seiten des Verbindungsrahmens mit Seitenplatten (25) versehen sind, die Steuereinheit mit einer der Seitenplatten (25) verbunden ist, und sich der Lufteinlass-Regelstab (18) aus der anderen Seitenplatte (25) erstreckt.

9. Heizöl-Heizeinrichtung für Camping im Freien nach Anspruch 1, wobei die zylindrische Struktur weiter einen Wärmedämmzylinder (26) umfasst, der außerhalb des Verbrennungszylinders (2) aufgehülst ist, das Gehäuse einen unteren Schild (27) umfasst, ein oberes Ende des unteren Schildes (27) mit einem vorderen oberen Schild (28) verbunden ist, der gemäß dem Wärmedämmzylinder (26) angeordnet ist, und einem hinteren oberen Schild (29), der gemäß der Verbrennungskopfanordnung zu der Luftzufuhranordnung angeordnet ist, der hintere obere Schild (29) mit einem Griff (30) versehen ist, und ein vorderes Ende zwischen dem vorderen oberen Schild (28) und dem unteren Schild (27) mit einer Maskenanordnung (31) verbunden ist.

10. Heizöl-Heizeinrichtung für Camping im Freien nach Anspruch 9, wobei die Stromspeicheranordnung eine Speicherbatterie und/oder ein Solarpanel umfasst, die/das auf dem vorderen oberen Schild (28) oder dem hinteren oberen Schild (29) angeordnet ist.

## Revendications

1. Appareil de chauffage à mazout pour camping en extérieur, comprenant un réservoir de mazout (1), dans lequel le réservoir de mazout (1) est pourvu d'une structure cylindrique, la structure cylindrique comprend un boîtier, un cylindre de combustion (2) est disposé dans le boîtier, une extrémité arrière du cylindre de combustion (2) est reliée à un ensemble tête de combustion, une extrémité avant du cylindre de combustion (2) est pourvue d'une sortie d'air chaud, un ensemble d'alimentation en air est disposé à l'arrière dans le boîtier en correspondance avec l'ensemble tête de combustion, un ensemble de commande est disposé sur un côté du réservoir de mazout (1), l'ensemble tête de combustion comprend un plateau fixe (3), un bord externe du plateau fixe (3) est relié à un plateau stabilisateur de flamme, une buse de pulvérisation de mazout et une aiguille d'allumage reliées à une partie de milieu du plateau fixe (3) sont disposées dans le plateau stabilisateur de flamme,
**caractérisé en ce qu'**un ensemble de stockage d'énergie relié électriquement à l'ensemble de commande est en outre disposé sur le boîtier,
et **en ce que** plusieurs anneaux de retenue de feu (5) sont disposés uniformément dans le cylindre de combustion (2), des ouvertures de la pluralité d'anneaux de retenue de feu (5) sont disposées, de grande à petite, à partir de l'ensemble tête de combustion vers une partie de queue du cylindre de combustion (2), une pluralité de trous traversants de combustion répartis de manière régulière ou irrégulière sont formés dans la pluralité d'anneaux de retenue de feu (5), et les anneaux de retenue de feu (5) et les trous traversants de combustion bloquent un temps de séjour d'une flamme pendant la combustion, améliorant ainsi l'efficacité de combustion dans le cylindre de combustion (2).

2. Appareil de chauffage à mazout pour camping en extérieur selon la revendication 1, dans lequel un manchon en corne (7) s'étendant dans le cylindre de combustion (2) est relié au milieu du plateau fixe (3), une extrémité du manchon en corne (7) disposée dans le cylindre de combustion (2) est recouverte d'un couvercle de guidage d'air de manière coordonnée, une partie de milieu de l'autre extrémité du manchon en corne (7) est pourvue d'une lame de guidage d'air (9), et la lame de guidage d'air (9) est située dans le plateau stabilisateur de flamme.

3. Appareil de chauffage à mazout pour camping en extérieur selon la revendication 2, dans lequel le couvercle de guidage d'air comprend un corps de couvercle (10) relié au plateau fixe (3), un manchon de guidage d'air conique (11) est disposé au niveau d'une extrémité interne du corps de couvercle (10), un trou traversant de guidage d'air de milieu est formé au niveau d'une extrémité supérieure du manchon de guidage d'air conique (11), et plusieurs trous traversants de guidage d'air latéraux sont formés uniformément dans le manchon de guidage d'air conique (11).

4. Appareil de chauffage à mazout pour camping en extérieur selon la revendication 2, dans lequel une pluralité de trous traversants de combustion répartis de manière régulière ou irrégulière sont formés dans le plateau fixe (3), le manchon en corne (7) et la lame de guidage d'air (9), respectivement.

5. Appareil de chauffage à mazout pour camping en extérieur selon la revendication 1, dans lequel une extrémité externe du plateau stabilisateur de flamme est reliée à une volute (14), un côté de la volute (14) est pourvu d'un moteur à volute (14), une entrée d'air est formée dans l'autre côté de la volute (14), l'entrée d'air est reliée en correspondance avec une plaque de fixation d'entrée d'air (16) formée avec un trou d'entrée d'air, un déflecteur de régulation d'entrée d'air (17) est disposé de manière mobile dans la plaque de fixation d'entrée d'air (16), et une tige de régulation d'entrée d'air (18) est reliée à une surface latérale du déflecteur de régulation d'entrée d'air (17).

6. Appareil de chauffage à mazout pour camping en extérieur selon la revendication 1, dans lequel un côté du plateau stabilisateur de flamme est relié à une pompe électromagnétique (19) à travers un collier de support de pompe de manière coordonnée, une extrémité d'entrée de la pompe électromagnétique (19) est reliée au réservoir de mazout (1) à travers un conduit d'aspiration de mazout (20), et une extrémité de sortie de la pompe électromagnétique (19) est reliée au plateau stabilisateur de flamme à travers le conduit d'aspiration de mazout (20) et une jonction droite (21).

7. Appareil de chauffage à mazout pour camping en extérieur selon la revendication 1, dans lequel l'ensemble d'alimentation en air comprend un moteur à air froid (22) disposé au niveau d'une partie arrière du boîtier, une extrémité de sortie du moteur à air froid (22) est reliée à une pale de ventilateur (23), et une extrémité arrière du boîtier est pourvue d'un couvercle grillagé arrière (24).

8. Appareil de chauffage à mazout pour camping en extérieur selon la revendication 5, dans lequel le réservoir de mazout (1) et le boîtier sont reliés à travers un châssis de liaison, le boîtier est disposé au niveau d'une extrémité supérieure du châssis de liaison, les deux côtés du châssis de liaison sont pourvus de plaques latérales (25), l'ensemble de commande est relié à l'une des plaques latérales (25), et la tige de régulation d'entrée d'air (18) s'étend hors de l'autre plaque latérale (25).

9. Appareil de chauffage à mazout pour camping en extérieur selon la revendication 1, dans lequel la structure cylindrique comprend en outre un cylindre d'isolation thermique (26) emmanché à l'extérieur du cylindre de combustion (2), le boîtier comprend un bouclier inférieur (27), une extrémité supérieure du bouclier inférieur (27) est reliée à un bouclier supérieur avant (28) disposé en correspondance avec le cylindre d'isolation thermique (26) et un bouclier supérieur arrière (29) disposé en correspondance avec l'ensemble tête de combustion à l'ensemble d'alimentation en air, le bouclier supérieur arrière (29) est pourvu d'une poignée (30), et une extrémité avant entre le bouclier supérieur avant (28) et le bouclier inférieur (27) est reliée à un ensemble masque (31).

10. Appareil de chauffage à mazout pour camping en extérieur selon la revendication 9, dans lequel l'ensemble de stockage d'énergie comprend une batterie de stockage et/ou un panneau solaire disposé sur le bouclier supérieur avant (28) ou le bouclier supérieur arrière (29).
